# EUROPEAN PATENT SPECIFICATION

(11) **EP 2 941 987 B1**
(45) Date of publication and mention of the grant of the patent: **28.11.2018**
(21) Application number: 12890640.1
(22) Date of filing: 31.12.2012
(51) Int. Cl.: A47J 43/06, A47J 43/04, A47J 43/07

(54) **DEVICE FOR ACCOMMODATING HANDHELD STIRRER ASSEMBLY AND ACCOMMODATING METHOD THEREOF**
VORRICHTUNG ZUR AUFNAHME EINES TRAGBAREN RÜHRERS UND VERFAHREN DAFÜR
DISPOSITIF DE RÉCEPTION D'ENSEMBLE MÉLANGEUR PORTATIF ET PROCÉDÉ DE RÉCEPTION DE CELUI-CI

(43) Date of publication of application: 11.11.2015
(73) Proprietor: Liantek Electrical Appliances (Shenzhen) Co. Ltd., Shenzhen, Guangdong 518109 (CN)
(72) Inventor: LI, Xiaochuan, Shenzhen, Guangdong 518109 (CN)
(74) Representative: Proi World Intellectual Property GmbH
(86) International application number: PCT/CN2012/088146
(87) International publication number: WO 2014/101241

(56) References cited:
- WO-A1-2006/015403
- WO-A1-2007/020143
- CN-A- 101 485 547
- CN-U- 201 939 170
- DE-U1- 20 318 918
- GB-A- 1 453 520
- US-A- 6 068 397

## Description

### TECHNICAL FIELD

The invention relates to a food handling device, especially a handheld stirrer.

### BACKGROUND ART

Most handheld stirrers of the prior art are relatively large, inconvenient to store when not used. In particular, no accommodating method is provided for users to accommodate the handheld portion and stirring portion of the said handheld stirrer when not used. Since the handheld portion and stirring portion are exposed to the natural environment, there will be great amount of dust accumulated on the surface of the handheld portion and stirring portion. Thus, they are required to be cleaned frequently, bringing inconvenience to users.

WO2006/015403 discloses a cordless kitchen appliance comprising a power unit, a detachable blade extension unit and a base module; said power unit and said detachable extension unit adapted for retention in said base module when not in use.

### CONTENT OF THE INVENTION

The invention is intended to solve the technical issues by means of avoiding the deficiencies of the above the prior art, and put forward an accommodating device for a handheld stirrer assembly as well as a method of accommodating the handheld stirrer with the device, where each component of the handheld stirrer can be kept compactly and cleanly, isolated from the dust of the external environment, besides, the device can store the said handheld stirrer assembly with as little space as possible.

The invention can solve the said technical problem with the following technical proposal:
Design and manufacture a device for accommodating a handheld stirrer assembly. The said handheld stirrer assembly comprises a handheld portion installed with a drive motor and a control unit, a transmission stirring portion which can be detachably connected to the said handheld portion and transmit the output torque of the handheld portion by virtue of the transmission rod thereof, as well as at least one stirring cutter which can be detachably installed to the transmission rod head of the said transmission stirring portion. In particular, the said accommodating device comprises an accessory accommodating base, an accommodating and supporting partition cover covering the accessory accommodating base, as well as an accommodating main cover with a measuring cup function covering the said accessory accommodating base and the accommodating and supporting partition cover. The said accommodating main cover with a measuring cup function takes on the shape of an upturned bucket. The said stirring cutter is placed in a space between the said accessory accommodating base and the accommodating and supporting partition cover. The said handheld portion and transmission stirring portion are supported by the accommodating and supporting partition cover, and placed in a space between the accommodating and supporting partition cover and the accommodating main cover with a measuring cup function.

To ensure that each accessory of the handheld stirrer stored is irremovable, accessory recesses are processed on the said accessory accommodating base according to the shape of the said stirring cutter, such that the said stirring cutter can be caught in the said accessory recesses, thus the said stirring cutter is securely positioned and placed.

To position the said handheld portion and transmission stirring portion, a main device recesses are processed on the top of the said accommodating and supporting partition cover according to the head shape of the said handheld portion and the end shape of the transmission stirring portion, such that head of the said handheld portion and end of the transmission stirring portion can be caught in the said main device recesses. Thus, the said handheld portion and transmission stirring portion can be securely supported.

Specifically, the said main device recess comprises a handheld recess for positioning and supporting the said handheld portion and a stirring portion recess for positioning and supporting the said transmission stirring portion. The said handheld recess and stirring portion recess are arranged mutually independent, such that head of the said handheld portion can be caught in the said handheld recess and end of the said transmission stirring portion can be caught in the said stirring portion recess. Thus, the said handheld portion and transmission stirring portion are securely positioned and supported by the said accommodating and supporting partition cover.

Actual structure of each accessory is that, the said stirring cutter comprises a flat stirring head. The flat stirring head comprises a tubular first connector, as well as a circular flat-shaped first stirring head whose central part is connected to the first connector. The said first connector can be detachably connected to the transmission rod of the said transmission stirring portion.

The said stirring cutter comprises an inner blade stirring head. The inner blade stirring head comprises a tubular second connector, as well as a circular flat-shaped second stirring head whose central part is connected to the second connector. At least one through hole is processed on the flat plate of the second stirring head, edge of each through hole is respectively arranged with a spherical cutting blade, the said spherical cutting blades cover the corresponding through holes partially. The said second connector can be detachably connected to the transmission rod of the said transmission stirring portion.

The said stirring cutter comprises a twin-blade stirring head. The twin-blade stirring head comprises a tubular third connector, as well as a straight strip-shaped third stirring head whose central part is connected to the third connector. Both ends of the third stirring head are respectively processed with a cutting blade portion. The said third connector can be detachably connected to the transmission rod of the said transmission stirring portion.

The said stirring cutter comprises a four-blade stirring head. The said four-blade stirring head comprises a tubular fourth connector, as well as a straight strip-shaped fourth stirring head whose central part is connected to the fourth connector. One end of the fourth stirring head is an upper blade bent upward, while the other end is a lower blade bent twice downward whose tool face is parallel to the central part of the said fourth stirring head. Central part of the said fourth stirring head is arranged with two triangular flat-shaped horizontal blades protruding outwardly. The said fourth connector can be detachably connected to the transmission rod of the said transmission stirring portion.

The said accommodating device further comprises a cutter opener for assembling and disassembling the stirring cutter from the said transmission stirring portion. The said cutter opener is strip shaped, one end of which is processed with a clamping mouth recessed towards the plate inwardly. With the clamping and buckling function of the clamping mouth, the said stirring cutter is installed to the transmission rod head of the transmission stirring portion, or the said stirring cutter is removed from the transmission rod head of the transmission stirring portion.

The said transmission stirring portion comprises a stirring head cover arranged at the head end of the transmission rod, for covering the stirring cutter which is installed at the said transmission rod head. The said stirring head cover comprises a conical surface shaped top cover, as well as a tubular skirt cover arranged to be connected to the lower edge of larger diameter of the top cover.

The invention also can solve the said technical problem with the following technical proposal:
Implement an assembly and accommodating method of a handheld stirrer assembly based on the above accommodating device and handheld stirrer assembly; the said method comprises the following steps:
A. When the said handheld stirrer is required to be used, lift and take down the said accommodating main cover with a measuring cup function from the accessory accommodating base covering the accommodating and supporting partition cover, and turn over the accommodating main cover with a measuring cup function to be the state where the bottom of the bucket is located under the opening of the bucket, thus, the accommodating main cover with a measuring cup function is served as a measuring cup;
B. Infuse the substance required to be stirred into the said upturned accommodating main cover with a measuring cup function which is served as a measuring cup;
C. Assemble the said handheld portion with the transmission stirring portion;
D. Open the said accommodating and supporting partition cover, choose a stirring cutter, and install the stirring cutter to the transmission rod head of the transmission stirring portion by virtue of the cutter opener;
E. Stretch the assembled handheld stirrer into the said accommodating main cover with a measuring cup function for stirring;
F. When the said handheld stirrer is required to be accommodated after the stir, remove the stirring cutter from the transmission rod head of the transmission stirring portion by virtue of the cutter opener;
G. Place the stirring cutter and cutter opener into the said accessory accommodating base; and cover the accessory accommodating base with the said accommodating and supporting partition cover;
H. Disassemble the said handheld portion and the transmission stirring portion, and place them at the top of the accommodating and supporting partition cover;
I. After cleaning the said accommodating main cover with a measuring cup function, upturn it to be the state where the bottom of the bucket is located under the opening of the bucket, so as to cover the said handheld portion and transmission stirring portion, as well as the said accommodating and supporting partition cover and accessory accommodating base.

Compared with the prior arts, technical effects of the invention "Device for accommodating a handheld stirrer assembly and accommodating method thereof are that:
the accommodating device of the invention can store a complete set of handheld stirrer assembly comprising varieties of stirring cutters, and all the assemblies are under the protection of the dust cover, so as to avoid dust, reduce the number of times of cleaning the handheld portion, the stirring portion and the measuring cup, and then save water or cleaning agent; besides, the said accommodating main cover with a measuring cup function can not only play the role of a dust cover, but can be served as a measuring cup, achieving multi-purpose usage; accommodating structure of the said handheld stirrer assembly in the accommodating device is compact and small, convenient to use and store, with small space occupation.

### DESCRIPTION OF FIGURES

Figure 1 shows an orthographic projection sectional view (front view direction) of the preferred embodiment "a device for accommodating a handheld stirrer assembly and an accommodating method thereof of the invention;
Figure 2 shows an orthographic projection top view diagram of the said preferred embodiment;
Figure 3 shows an axonometric projection diagram of the said preferred embodiment at the decomposition state;
Figure 4 shows an axonometric projection diagram of the flat stirring head 231 of the said preferred embodiment;
Figure 5 shows an axonometric projection diagram of the inner blade stirring head 232 of the said preferred embodiment;
Figure 6 shows an axonometric projection diagram of the twin-blade stirring head 233 of the said preferred embodiment;
Figure 7 shows an axonometric projection diagram of the four-blade stirring head 234 of the said preferred embodiment;
Figure 8 shows an axonometric projection diagram of the cutter opener 24 of the said preferred embodiment;
Figure 9 shows an axonometric projection diagram of the handheld portion 21 and transmission stirring portion 22 of the said preferred embodiment when assembled;
Figure 10 shows an axonometric projection diagram of the said preferred embodiment when the four-blade stirring head 234 is assembled to the handheld stirrer 2;
Figure 11 shows an axonometric projection diagram of the said preferred embodiment when the handheld stirrer 2 is stirring in the accommodating main cover with a measuring cup function 13.

### MODE OF CARRYING OUT THE INVENTION MODEL

To further illustrate the principle and structure of the invention, the invention is further described in detail in accordance with the preferable embodiments shown in the figures.

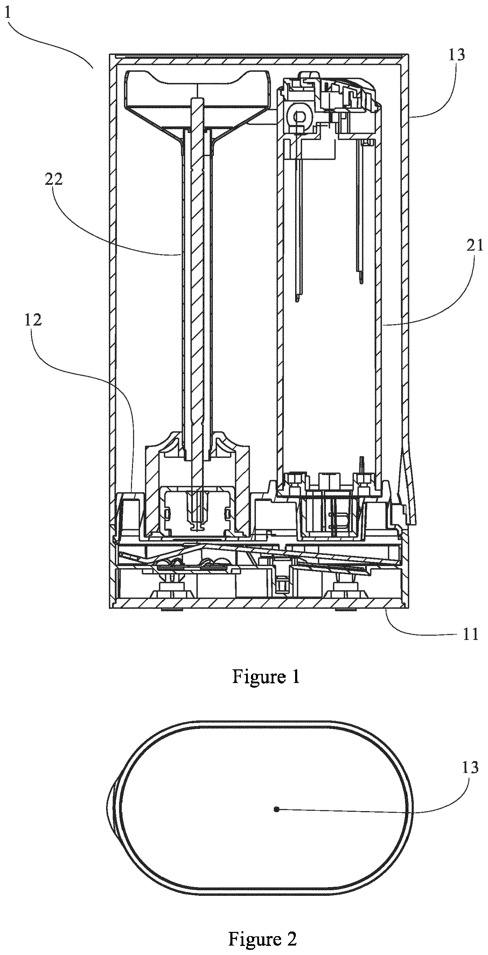

The invention has presented a device for accommodating a handheld stirrer assembly. As is shown by Figure 1 to Figure 3, the said handheld stirrer assembly comprises a handheld portion 21 installed with a drive motor and a control unit, a transmission stirring portion 22 which can be detachably connected to the said handheld portion 21 and transmit the output torque of the handheld portion 21 by virtue of the transmission rod thereof, as well as at least one stirring cutter 23 which can be detachably installed to the transmission rod head of the said transmission stirring portion 22.The said handheld portion 21, transmission stirring portion 22 and stirring prop 23 are assembled to be a handheld stirrer 2. The said accommodating device 1 comprises an accessory accommodating base 11, an accommodating and supporting partition cover 12 covering the accessory accommodating base, as well as an accommodating main cover with a measuring cup function 13 covering the said accessory accommodating base 11 and the accommodating and supporting partition cover 12.The said accommodating main cover with a measuring cup function 13 takes on the shape of an upturned bucket. When served as the main cover of the accommodating device, the bucket bottom of the accommodating main cover with a measuring cup function 13 is at the top of the bucket opening, when the accommodating main cover with a measuring cup function 13 is upturned to be the state where the bottom of the bucket is located under the opening of the bucket, the accommodating main cover with a measuring cup function 13 can be served as the measuring cup for placing the substance required to be stirred. The said stirring cutter 23 and cutter opener 24 are placed in a space between the said accessory accommodating base 11 and the accommodating and supporting partition cover 12.The said handheld portion 21 and transmission stirring portion 22 are supported by the accommodating and supporting partition cover 12, and placed in a space between the accommodating and supporting partition cover 12 and the accommodating main cover with a measuring cup function 13.

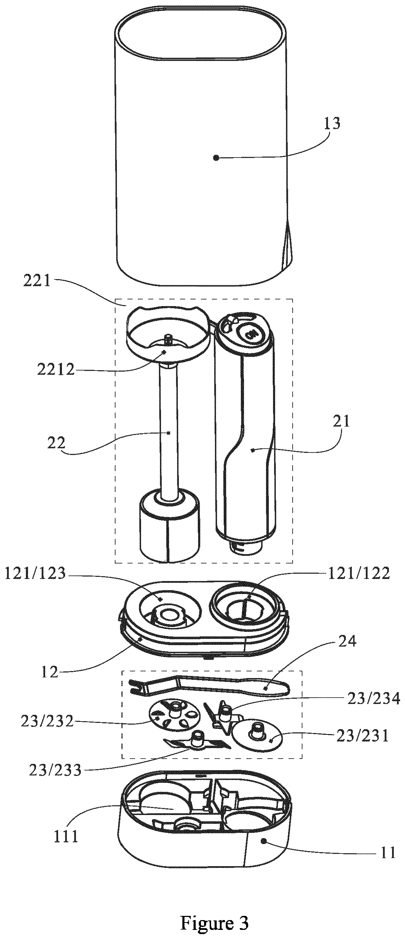

As is shown in Figure 3, to position and store each accessory of the handheld stirrer and ensure no mutual influence, an accessory recesses 111 are processed on the said accessory accommodating base 11 according to the shape of the said stirring cutter 23, such that the said stirring cutter 23 can be caught in the said accessory recesses 111, thus the said stirring cutter 23 is securely positioned and placed. Of course, when the said handheld stirrer assembly further comprises the cutter opener 24 stated below, shape of the said accessory recesses 111 shall also be designed as the shape matching with that of the cutter opener 24. The preferred embodiment of the invention is a concrete implementation proposal implementing the invention based on the situation that the said handheld stirrer assembly further comprises the said cutter opener 24. Therefore, in the preferred embodiment of the invention, considering the shape of the cutter opener 24, the accessory recesses 111 are also designed with a position for positioning and placing the said cutter opener 24.

To position and place the said handheld portion 21 and transmission stirring portion 22, a main device recesses 121 are processed on the top of the said accommodating and supporting partition cover 12 according to the head shape of the said handheld portion 21 and the end shape of the transmission stirring portion 22, such that head of the said handheld portion 21 and end of the transmission stirring portion 22 can be caught in the said main device recesses 121. Thus, the said handheld portion 21 and transmission stirring portion 22 can be securely supported. As is shown in Figure 3, end of the said transmission stirring portion 22 is the end opposite to the head end for installing the stirring cutter 23 of the transmission stirring portion 22.

As is shown in Figure 3, in the preferred embodiment of the invention, the said main device recess 121 comprises a handheld recess 122 for positioning and supporting the said handheld portion 21 and a stirring portion recess 123 for positioning and supporting the said transmission stirring portion 22. The said handheld recess 122 and stirring portion recess 123 are arranged mutually independent, such that head of the said handheld portion 21 can be caught in the said handheld recess 121 and end of the said transmission stirring portion 22 can be caught in the said stirring portion recess 122. Thus, the said handheld portion 21 and transmission stirring portion 22 are securely positioned and supported by the said accommodating and supporting partition cover 12.

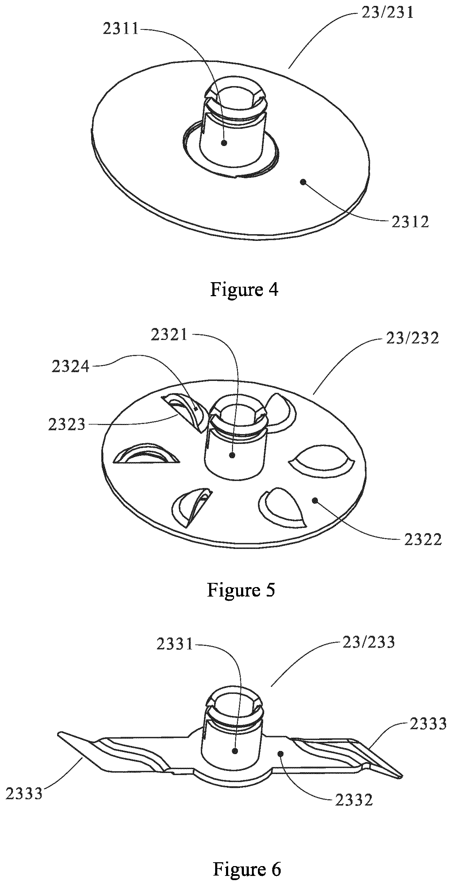

The preferred embodiment of the invention adopts four stirring cutters 23. As is shown in Figure 4, the said first stirring cutter 23 comprises a flat stirring head 231. The flat stirring head 231 comprises a tubular first connector 2311, as well as a circular flat-shaped first stirring head 2312 whose central part is connected to the first connector 2311.The said first connector 2311 can be detachably connected to the transmission rod of the said transmission stirring portion 22.

As is shown in Figure 5, the said second stirring cutter 23 comprises an inner blade stirring head 232. The inner blade stirring head 232 comprises a tubular second connector 2321, as well as a circular flat-shaped second stirring head 2322 whose central part is connected to the second connector 2321. At least one through hole 2323 is processed on the flat plate of the second stirring head 2322, edge of each through hole is respectively arranged with a spherical cutting blade 2324, the said cutting blades 2324 cover the through holes 2323 corresponding to the cutting blades 2324 partially. The said second connector 2321 can be detachably connected to the transmission rod of the said transmission stirring portion 22.

As is shown in Figure 6, the said third stirring cutter 23 comprises a twin-blade stirring head 233. The twin-blade stirring head 233 comprises a tubular third connector 2331, as well as a straight strip-shaped third stirring head 2332 whose central part is connected to the third connector 2331. Both ends of the third stirring head 2332 are respectively processed with a cutting blade portion 2333. The said third connector 2331 can be detachably connected to the transmission rod of the said transmission stirring portion 22.

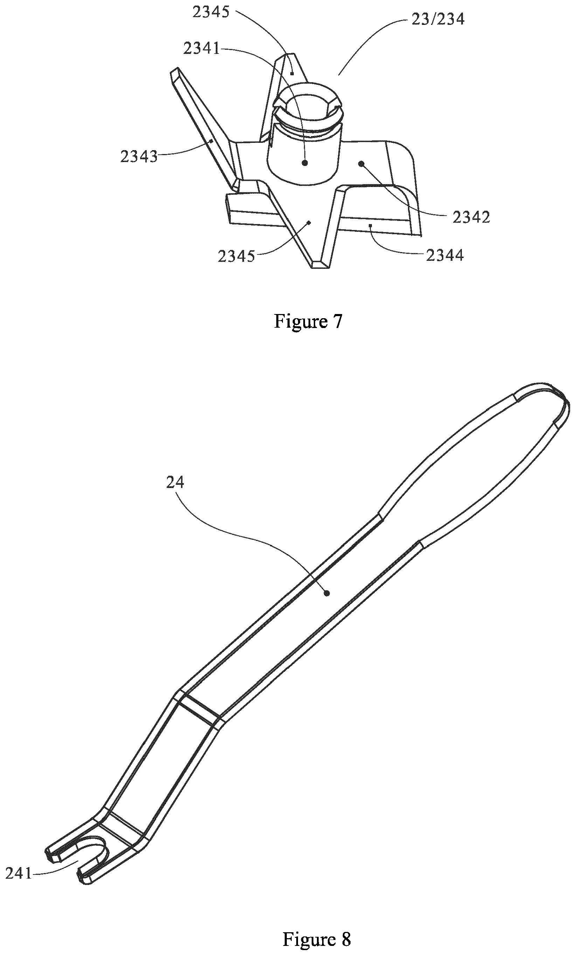

As is shown in Figure 7, the said fourth stirring cutter 23 comprises a four-blade stirring head 234. The four-blade stirring head 234 comprises a tubular fourth connector 2341, as well as a straight strip-shaped fourth stirring head 2342 whose central part is connected to the fourth connector 2341. One end of the fourth stirring head 2342 is an upper blade 2343 bent upward, while the other end is a lower blade 2344 bent twice downward whose tool face is parallel to the central part of the said fourth stirring head 2342. Central part of the said fourth stirring head 2342 is arranged with two triangular flat-shaped horizontal blades 2345 protruding outwardly. The said fourth connector 2341 can be detachably connected to the transmission rod of the said transmission stirring portion 22.

As is shown in Figure 8, in the preferred embodiment of the invention, the said accommodating device 1 further comprises a cutter opener 24 for dismounting the stirring cutter 23 from the said transmission stirring portion 22. The said cutter opener 24 is strip shaped, one end of which is processed with a clamping mouth 241 recessed towards the plate inwardly. With the clamping and buckling function of the clamping mouth 241, the said stirring cutter 23 is installed to the transmission rod head of the transmission stirring portion 22, or the said stirring cutter 23 is removed from the transmission rod head of the transmission stirring portion 22.

In the preferred embodiment of the invention, the said transmission stirring portion 22 comprises a stirring head cover 221 arranged at the head end of the transmission rod, for covering the stirring cutter 23 which is installed at the said transmission rod head. The said stirring head cover 221 comprises a conical surface shaped top cover 2211, as well as a tubular skirt cover 2212 arranged to be connected to the lower edge of larger diameter of the top cover 2211.

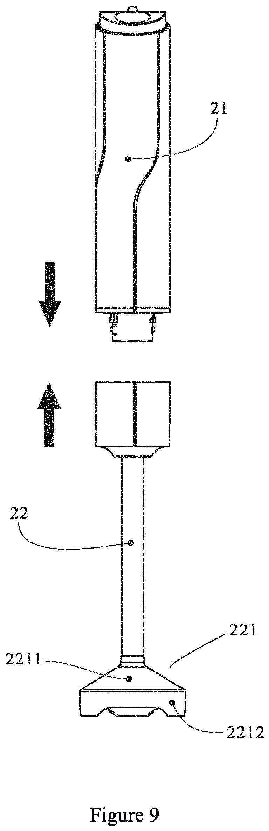

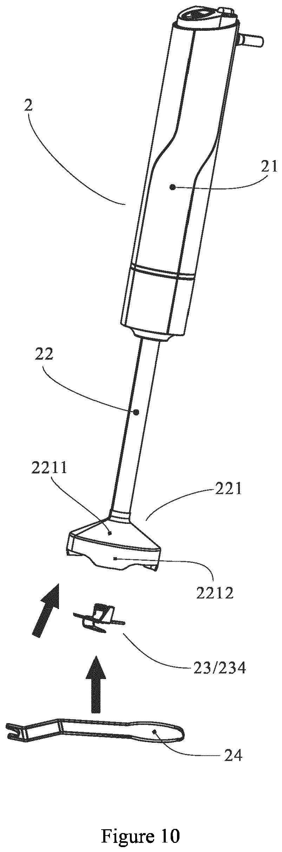

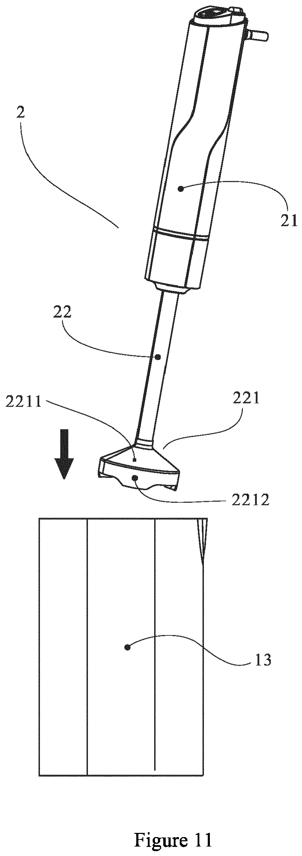

Accommodating structure of the invention is compact and small, convenient to use and store. The accommodating device 1 can store a complete set of handheld stirrer assemblies, which are covered, so as to avoid outside dust and reduce number of times of cleaning. Meanwhile, the said main accommodating cover with a measuring cup function 13 can also be served as a measuring cup, achieving multi-purpose usage. The invention has not only reduced the cleaning frequency of the handheld stirrer assembly, but has saved water resource. Below is the explanation of the specific application method of the invention adopting the accommodating device of the above proposal in detail based on the above accommodating device 1 and handheld stirrer assembly, comprising the following steps:
A. When the said handheld stirrer is required to be used, lift and take down the said accommodating main cover with a measuring cup function 13 from the accessory accommodating base 11 covering the accommodating and supporting partition cover 12 as is shown in Figure 11, and turn over the accommodating main cover with a measuring cup function 13 to be the state where the bottom of the bucket is located under the opening of the bucket, thus, the accommodating main cover with a measuring cup function 13 is served as a measuring cup;
B. Infuse the substance required to be stirred into the said upturned accommodating main cover with a measuring cup function 13 which is served as a measuring cup;
C. As is shown in Figure 9, assemble the said handheld portion 21 and the transmission stirring portion 22 according to the arrow direction;
D. Open the said accommodating and supporting partition cover 12, choose a stirring cutter 23 as is shown in Figure 10, and install the stirring cutter 23 to the transmission rod head of the transmission stirring portion 22 by virtue of the cutter opener 24;
E. As is shown in Figure 11, stretch the assembled handheld stirrer 2 into the said accommodating main cover with a measuring cup function 13 for stirring;
F. When the said handheld stirrer is required to be accommodated after the stir, remove the stirring cutter 23 from the transmission rod head of the transmission stirring portion 22 by virtue of the cutter opener 24;
G. Place the stirring cutter 23 and cutter opener 24 into the said accessory accommodating base 11; and cover the accessory accommodating base 11 with the said accommodating and supporting partition cover 12;
H. Disassemble the said handheld portion 21 and the transmission stirring portion 22, and place them at the top of the accommodating and supporting partition cover 12;
I. After cleaning the said accommodating main cover with a measuring cup function 13, upturn it to be the state where the bottom of the bucket is located under the opening of the bucket, so as to cover the said handheld portion 21 and transmission stirring portion 22, as well as the said accommodating and supporting partition cover 12 and accessory accommodating base 11.

The said handheld stirrer assembly is compactly accommodated into the accommodating device through the above accommodating method, such that the whole using process of the handheld stirrer is tidy and convenient. The said accommodating main cover with a measuring cup function 13 can not only play the role of a stirring measuring cup, but can avoid dust, achieving dual-purpose usage, thus saving fussy operating steps for users, meanwhile, the compact structure in the accommodating device can save as much space as possible for users.

## Claims

1. A stirring product comprising a handheld stirrer assembly and an accommodating device for accommodating the handheld stirrer assembly,
wherein the handheld stirrer assembly comprises a handheld portion (21) installed with a drive motor and a control unit, a transmission stirring portion (22) adapted to be detachably connected to the handheld portion (21) and transmit an output torque of the handheld portion (21) by virtue of an transmission rod thereof, and at least one stirring cutter (23) adapted to be detachably installed to a head of the transmission rod of the transmission stirring portion (22); **characterized in that**:
the accommodating device (1) comprises an accessory accommodating base (11), an accommodating and supporting partition cover (12) adapted to cover the accessory accommodating base, and an accommodating main cover with a measuring cup function (13) adapted to cover the accessory accommodating base (11) and the accommodating and supporting partition cover (12); wherein the accommodating main cover (13) takes on the shape of a bucket;
when the handheld stirrer assembly is accommodated in the accommodating device (1), the stirring cutter (23) is placed in a space between the accessory accommodating base (11) and the accommodating and supporting partition cover (12); the handheld portion (21) and the transmission stirring portion (22) are supported by the accommodating and supporting partition cover (12), and placed in a space between the accommodating and supporting partition cover (12) and the accommodating main cover.

2. The stirring product according to Claim 1 wherein
an accessory recess (111) is formed on the accessory accommodating base (11) according to the shape of the stirring cutter (23), such that the stirring cutter (23) can be caught in the accessory recess (111) and securely positioned and placed therein.

3. The stirring product according to Claim 1, wherein
a main device recess (121) is formed on a top of the accommodating and supporting partition cover (12) according to the shape of a head of the handheld portion (21) and the shape of an end of the transmission stirring portion (22), such that the head of the handheld portion (21) and the end of the transmission stirring portion (22) can be caught in the main device recess (121) to allow the handheld portion (21) and the transmission stirring portion (22) to be securely supported.

4. The stirring product according to Claim 3, wherein
the main device recess (121) comprises a handheld recess (122) for positioning and supporting the handheld portion (21) and a stirring portion recess (123) for positioning and supporting the transmission stirring portion (22); the handheld recess (122) and stirring portion recess (123) are arranged mutually independent, such that a head of the handheld portion (21) can be caught in the handheld recess (121) and an end of the transmission stirring portion (22) can be caught in the stirring portion recess (122) to allow the handheld portion (21) and the transmission stirring portion (22) to be securely positioned and supported by the accommodating and supporting partition cover (12).

5. The stirring product according to Claim 1, wherein
the stirring cutter (23) comprises a flat stirring head (231); the flat stirring head (231) comprises a tubular first connector (2311) and a circular flat-shaped first stirring head (2312) with a central part connected to the first connector (2311); the first connector (2311) adapted to be detachably connected to the transmission rod of the transmission stirring portion (22).

6. The stirring product according to Claim 1, wherein
the stirring cutter (23) comprises an inner blade stirring head (232); the inner blade stirring head (232) comprises a tubular second connector (2321) and a circular flat-shaped second stirring head (2322) whose central part is connected to the second connector (2321); at least one through hole (2323) is formed on the flat plate of the second stirring head (2322), edge of each through hole respectively arranged with a spherical cutting blade (2324); the spherical cutting blades (2324) cover the corresponding through holes (2323) partially; and the second connector (2321) is adapted to be detachably connected to the transmission rod of the transmission stirring portion (22).

7. The stirring product according to Claim 6, wherein
the stirring cutter (23) comprises a twin-blade stirring head (233); the twin-blade stirring head (233) comprises a tubular third connector (2331) and a straight strip-shaped third stirring head (2332) whose central part is connected to the third connector (2331); both ends of the third stirring head (2332) are respectively formed with a cutting blade portion (2333), and the third connector (2331) is adapted to be detachably connected to the transmission rod of the transmission stirring portion (22).

8. The stirring product according to Claim 1, wherein
the stirring cutter (23) comprises a four-blade stirring head (234); the sid four-blade stirring head (234) comprises a tubular fourth connector (2341) and a straight strip-shaped fourth stirring head (2342) whose central part is connected to the fourth connector (2341); an end of the fourth stirring head (2342) is an upper blade (2343) bent upward, while another end is a lower blade (2344) bent twice downward whose tool face is parallel to the central part of the fourth stirring head (2342); the central part of the fourth stirring head (2342) is arranged with two triangular flat-shaped horizontal blades (2345) protruding outwardly, and the fourth connector (2341) is adapted to be detachably connected to the transmission rod of the transmission stirring portion (22).

9. The stirring product according to Claim 1, wherein
it further comprises a cutter opener (24) for assembling and disassembling the stirring cutter (23) from the transmission stirring portion (22); the cutter opener (24) is strip shaped, one end of which is provided with a clamping mouth (241) recessed towards the plate inwardly; with the clamping and buckling function of the clamping mouth (241), the stirring cutter (23) is installed to the transmission rod head of the transmission stirring portion (22), or the stirring cutter (23) is removed from the transmission rod head of the transmission stirring portion (22).

10. The stirring product according to Claim 1, wherein
the transmission stirring portion (22) comprises a stirring head cover (221) arranged at the head end of the transmission rod, for covering the stirring cutter (23) which is installed at the transmission rod head; the stirring head cover (221) comprises a conical surface shaped top cover (2211) and a tubular skirt cover (2212) arranged to be connected to a lower edge of the top cover (2211) end of larger diameter.

11. A method of operating a stirring product according to claim 1, **characterized in that** the method comprises the following steps:
A. when the handheld stirrer is required to be used, lift and take down the accommodating main cover with the measuring cup function (13) from the accessory accommodating base (11) covering the accommodating and supporting partition cover (12), and turn over the accommodating main cover with a measuring cup function (13) to be the state where the bottom of the bucket is located under the opening of the bucket, thus, the accommodating main cover with a measuring cup function (13) is served as a measuring cup;
B. infuse the substance required to be stirred into the upturned accommodating main cover with a measuring cup function (13) which is served as a measuring cup;
C. assemble the handheld portion (21) with the transmission stirring portion (22);
D. open the accommodating and supporting partition cover (12), choose a stirring cutter (23), and install the stirring cutter (23) to the transmission rod head of the transmission stirring portion (22) by virtue of the cutter opener (24);
E. stretch the assembled handheld stirrer into the accommodating main cover with a measuring cup function (13) for stirring;
F. when the handheld stirrer is required to be accommodated after the stir, remove the stirring cutter (23) from the transmission rod head of the transmission stirring portion (22) by virtue of the cutter opener (24);
G. place the stirring cutter (23) and cutter opener (24) into the accessory accommodating base (11); and cover the accessory accommodating base (11) with the accommodating and supporting partition cover (12);
H. disassemble the handheld portion (21) and the transmission stirring portion (22), and place them at the top of the accommodating and supporting partition cover (12);
I. after cleaning the accommodating main cover with a measuring cup function (13), upturn it to be the state where the bottom of the bucket is located under the opening of the bucket, so as to cover the handheld portion (21) and transmission stirring portion (22), as well as the said accommodating and supporting partition cover (12) and accessory accommodating base (11).

## Patentansprüche

1. Rührvorrichtung umfassend eine Handrühranordnung und eine Aufnahmevorrichtung zur Aufnahme der Handrühranordnung, wobei die Handrühranordnung einen handgehaltene Abschnitt (21) aufweist, der mit einem Antriebsmotor und einer Steuereinheit ausgestattet ist, wobei ein Übertragungsrührteil (22) lösbar mit dem Handabschnitt (21) verbunden ist und das Ausgangsdrehmoment des handgehaltenen Abschnitts (21) aufgrund dessen Übertragungsstange überträgt, sowie mindestens ein Rührwerkzeug (23), der lösbar an dem Übertragungsstangenkopf des Übertragungsrührteils (22) angebracht werden kann,
**dadurch gekennzeichnet, dass**
die Aufnahmevorrichtung (1) eine Zubehöraufnahmeunterlage (11), eine die Zubehörunterbringungsbasis bedeckende Aufnahme- und Trag-Trennwandabdeckung (12) sowie eine aufnehmende Hauptabdeckung mit einer Messbecherfunktion (13) zum Abdecken der Zubehöraufnahmeunterlage(11) und der Aufnahme- und Trage-Trennwandabdeckung (12) umfasst; wobei die aufnehmende Hauptabdeckung (13) nimmt die Form eines Eimers an;
falls die Handrühranordnung in der Aufnahmevorrichtung (1) aufgenommen ist, ist das Rührwerkzeug (23) in einem Raum zwischen der Zubehöraufnahmeunterlage(11) und der Aufnahme- und Trage-Trennwandabdeckung (12) angeordnet; der handgehaltene Abschnitt(21) und der Übertragungsrührteil (22) werden durch die Aufnahme- und Trage-Trennwandabdeckung (12) getragen und in einem Raum zwischen der Aufnahme- und Trage-Trennwandabdeckung (12) und der aufnehmenden Hauptabdeckung.

2. Rührvorrichtung nach Anspruch 1, wobei
auf der Zubehöraufnahmeunterlage (11) je nach Form des Rührwerkzeuges (23) eine Zubehöraufnahme (111) derart bearbeitet sind, dass das Rührwerkzeug (23) in derZubehöraufnahme (111) aufgenommen, sicher positioniert und angeordnet sein kann.

3. Rührvorrichtung nach Anspruch 1, wobei
auf der Oberseite der Aufnahme- und Trageteilabdeckung (12) entsprechend der Kopfform des handgehaltenen Abschnitts(21) und der Endform des Übertragungsrührabschnitts (22)eine Hauptgeräteaussparung (121) ausgebildet ist, so dass der Kopf des handgehaltenen Abschnitts (21) und das Ende des Übertragungsrührabschnitts (22) in derHauptgeräteaussparung (121) gefangen werden können, um den handgehaltenen Abschnitt (21) und den Übertragungsrührabschnitt (22) sicher zu stützen.

4. Rührvorrichtung nach Anspruch 3, wobei
die Hauptgeräteaussparung (121) eine handgehaltene Aussparung (122) zum Positionieren und Abstützen des Handteils (21) und eine Rührteilausnehmung (123) zum Positionieren und Abstützen des Übertragungsrührabschnitts (22) umfasst; die handgehaltene Aussparung (122) und die Rührteilausnehmung (123) sind voneinander unabhängig angeordnet, so dass der Kopf des handgehaltenen Abschnitts (21) in der handgehaltenen Aussparung (121) und das Ende des Übertragungsrührabschnitts (22) in der Rührabschnittaussparung (122) gefangen sein können, um den handgehaltenen Abschnitt (21) und den Übertragungsrührabschnitt (22) sicher zu positionieren und mittels der Aufnahme- und Trag-Trennwandabdeckung (12) zu stützen.

5. Rührvorrichtung nach Anspruch 1, wobei
der Rührschneider (23) einen flachen Rührkopf (231) umfasst; der flache Rührkopf (231) umfasst einen rohrförmigen ersten Verbinder (2311) sowie einen kreisförmigen flachen ersten Rührkopf (2312), dessen zentraler Teil mit dem ersten Verbinder (2311) verbunden ist; der erste Verbinder (2311) ist konfiguriert, um lösbar mit der Übertragungsstange des Übertragungsrührabschnitts (22) verbundenzu sein.

6. Rührvorrichtung nach Anspruch 1, wobei
der Rührschneider (23) einen Innenschaufelrührkopf (232) aufweist; der Innenschaufelrührkopf (232) umfasst einen rohrförmigen zweiten Verbinder (2321) sowie einen kreisförmigen flachen zweiten Rührkopf (2322), dessen Mittelteil mit dem zweiten Verbinder (2321) verbunden ist; mindestens ein Durchgangsloch (2323) ist an der flachen Platte des zweiten Rührkopfs (2322) ausgebildet, wobei der Rand jedes Durchgangslochs jeweils mit einer sphärischen Schneidklinge (2324) ausgestattet ist, die die sphärischen Schneidklingen (2324) bedecken entsprechende Durchgangslöcher (2323) teilweise; und der zweite Verbinder (2321) ist konfiguriert, um lösbar mit der Übertragungsstange des Übertragungsrührabschnitts (22) verbunden zu sein.

7. Rührvorrichtung nach Anspruch 6, wobei
der Rührschneider (23) einen Doppelflügelrührkopf (233) umfasst; der Doppelflügelrührkopf (233) umfasst einen rohrförmigen dritten Verbinder (2331) sowie einen geradlinigen streifenförmigen dritten Rührkopf (2332), dessen Mittelteil mit dem dritten Verbinder (2331) verbunden ist; beide Enden des dritten Rührkopfes (2332) sind jeweils mit einem Schneidklingenabschnitt (2333) bearbeitet, und der dritte Verbinder (2331) is konfiguriert, um lösbar mit der Übertragungsstange des Übertragungsrührabschnitts (22) verbunden zu sein.

8. Rührvorrichtung nach Anspruch 1, wobei
der Rührschneider (23) einen Vierblatt-Rührkopf (234) umfasst; der Vierblatt-Rührkopf (234) umfasst einen rohrförmigen vierten Verbinder (2341) sowie einen geraden streifenförmigen vierten Rührkopf (2342), dessen Mittelteil mit dem vierten Verbinder (2341) verbunden ist; ein Ende des vierten Rührkopfs (2342) ist ein oberesBlatt (2343), das nach oben gebogen ist, während das andere Ende ein unteresBlatt (2344) ist, das zweimal nach unten gebogen ist, dessen Werkzeugfläche parallel zu dem zentralen Teil des vierten Rührkopfs ist (2342); der mittlere Teil des vierten Rührkopfes (2342) ist mit zwei dreieckigen, flachen, horizontalen Blättern (2345) versehen, die nach außen vorstehen, und der vierte Verbinder (2341) ist konfiguriert, um lösbar mit der Übertragungsstange des Übertragungsrührteils (22)verbunden zu sein.

9. Rührvorrichtung nach Anspruch 1, wobei
die Rührvorrichtung ferner einen Schneidvorrichtungsöffner (24) zum Zusammenbauen und Auseinanderbauen des Rührwerkzeuges (23) von dem Übertragungsrührabschnitt (22) aufweist; der Schneidvorrichtungsöffner (24) ist streifenförmig, wobei ein Ende davon mit einer Klemmöffnung (241) bearbeitet ist, die nach innen in Richtung der Platte ausgespart ist; mit der Klemm- und Knickfunktion der Klemmmündung (241) wird der Rührschneider (23) an dem Übertragungsstangenkopf des Übertragungsrührabschnitts (22) installiert, oder der Rührschneider (23) wird von dem Übertragungsstangenkopf des Übertragungsrührabschnitts (22) entfernt.

10. Rührvorrichtung nach Anspruch 1, wobei
der Übertragungsrührabschnitt (22) eine am Kopfende der Übertragungsstange angeordnete Rührkopfabdeckung (221) zum Abdecken des Rührwerkzeuges (23) umfasst, der an dem genannten Übertragungsstangenkopf installiert ist; die Rührkopfabdeckung (221) umfasst eine kegelflächenförmige obere Abdeckung (2211) sowie eine rohrförmige Schürzenabdeckung (2212), die so angeordnet ist, dass sie mit der unteren Kante des Endes der oberen Abdeckung (2211) mit größerem Durchmesser verbunden ist.

11. Verfahren zum Betrieb einer Rührvorrichtunggemäß Anspruch 1, **dadurch gekennzeichnet, dass** das Verfahren die folgenden Schritte umfasst:
A. wenn der Handrührer verwendet werden muss, Heben und Senken der Unterbringungshauptabdeckung mit einer Messbecherfunktion (13) von der Abdeckung der Zubehörunterbringungsbasis (11) zur Abdeckung der aufnehmenden und tragenden Trennwandabdeckung (12), und Umdrehen der Unterbringungshauptabdeckung mit einer Messbecherfunktion (13), um den Zustand zu schaffen, wobei sich der Boden der Wanne unter der Öffnung der Wanne befindet, somit die Unterbringungshauptabdeckung mit einer Messbecherfunktion (13) als Messbecherdient;
B. die zu rührende Substanz in die genannte umgedrehte Unterbringungshauptabdeckung mit einer Messbecherfunktion (13) infundieren, die als Messbecher dient;
C. Montiere den handgehaltenen Abschnitt (21) an dem Übertragungsrührabschnitt (22);
D. Öffne die Aufnahme- und Tragteilabdeckung (12), wähle einen Rührschneider (23) und installiere den Rührschneider (23) an dem Übertragungsstabkopf des Übertragungsrührabschnitts (22) mittels des Schneidöffners (24);
E. zum Rühren den zusammengebauten Handrührer in die Unterbringungshauptabdeckung mit einer Messbecherfunktion (13) strecken;
F. wenn der Handrührer nach dem Rühren untergebracht werden soll, den Rührschneider (23) von dem Übertragungsstangenkopf des Übertragungsrührabschnitts (22) mittels des Messeröffners (24) entfernen;
G. Platziere den Rührschneider (23) und den Messeröffner (24) in die Zubehörunterbringungsbasis (11); und Abdecken der Zubehörunterbringungsbasis (11) mit der Aufnahme- und Trageunterteilungsabdeckung (12);
H. den handgehaltenen Abschnitt (21) und den Übertragungsrührabschnitt (22) zerlegen und beide an der Oberseite der Aufnahme- und Trageunterteilungsabdeckung (12) anordnen;
I. Nach dem Reinigen der Unterbringungshauptabdeckung mit einer Messbecherfunktion (13) wird dieser in den Zustand zurückversetzt, in dem sich der Boden des Eimers unter der Öffnung des Eimers befindet, um den Handabschnitt (21) und einen Übertragungsrührabschnitt (22) sowie die Aufnahme- und Trageunterteilungsabdeckung (12) und die Zubehörunterbringungsbasis (11) abzudecken.

## Revendications

1. Produit mélangeur comprenant un ensemble mélangeur portatif comportant un dispositif de réception destiné à recevoir l'ensemble mélangeur portatif,
dans lequel l'ensemble mélangeur portatif comprend une partie portative (21) pourvue d'un moteur d'entraînement et d'une unité de commande, une partie de transmission du mouvement de mélange (22) adaptée à être reliée de façon détachable à la partie portative (21) et à transmettre un couple de sortie à la partie portative (21) par le biais d'une tige de transmission de celle-ci et au moins un couteau de mélange (23) adaptée à être installée de façon détachable sur une tête de la tige de transmission de la partie de transmission du mouvement de mélange (22) ; **caractérisé en ce que** :
le dispositif de réception (1) comprend une base de réception d'accessoire (11) un couvercle de séparation de réception et de support (12) adapté à recouvrir la base de réception d'accessoire et un couvercle principal de réception comportant une fonction de verre doseur (13) adapté à couvrir la base de réception d'accessoire (11) et le couvercle de séparation de réception et de support (12); dans lequel le couvercle principal de réception (13) prend la forme d'un godet ;
lorsque l'ensemble mélangeur portatif est réceptionné dans le dispositif de réception (1), le couteau de mélange (23) est placé dans un espace entre la base de réception d'accessoire (11) et le couvercle de séparation de réception et de support (12) ; la partie portative (21) et la partie de transmission du mouvement de mélange (22) sont supportées par le couvercle de séparation de réception et de support (12) et placées dans un espace entre le couvercle de séparation de réception et de support (12) et le couvercle principal de réception.

2. Produit mélangeur selon la revendication 1, dans lequel
un évidement pour accessoire (111) est formé dans la base de réception d'accessoire (11) selon la forme du couteau de mélange (23), de sorte que le couteau de mélange (23) peut être capturé dans l'évidement pour accessoire (111) et positionné en toute sécurité et placé dans celui-ci.

3. Produit mélangeur selon la revendication 1, dans lequel
un évidement principal du dispositif (121) est formé dans une partie supérieure du couvercle de séparation de réception et de support (12) selon la forme d'une tête de la partie portative (21) et la forme de l'extrémité de partie de transmission du mouvement de mélange (22), de sorte que la tête de partie portative (21) et l'extrémité de partie de transmission du mouvement de mélange (22) peuvent être capturées dans l'évidement principal du dispositif (121) pour permettre à la partie portative (21) et à la partie de transmission du mouvement de mélange (22) d'être supportées en toute sécurité.

4. Produit mélangeur selon la revendication 3, dans lequel
l'évidement principal du dispositif (121) comprend un évidement de la partie portative (122) destiné à positionner et à supporter la partie portative (21) et un évidement de la partie de mélange (123) destiné à positionner et à supporter la partie de transmission du mouvement de mélange (22) ; l'évidement de la partie portative (122) et l'évidement de la partie de mélange (123) sont agencées de façon mutuellement indépendante, de sorte qu'une tête de la partie portative (21) peut être capturée dans l'évidement de la partie portative (121) et une extrémité de la partie de transmission du mouvement de mélange (22) peut être capturée dans l'évidement de la partie de mélange (122) pour permettre à la partie portative (21) et à la partie de transmission du mouvement de mélange (22) d'être positionnées et supportées en toute sécurité par le couvercle de séparation de réception et de support (12).

5. Produit mélangeur selon la revendication 1, dans lequel
le couteau de mélange (23) comprend une tête de mélange plate (231) ; la tête de mélange plate (231) comprend un premier raccordement tubulaire (2311) et une première tête de mélange de forme plate circulaire (2312) comportant une partie centrale reliée au premier raccordement (2311); le premier raccordement (2311) adapté à être relié de façon détachable à la tige de transmission de la partie de transmission du mouvement de mélange (22).

6. Produit mélangeur selon la revendication 1, dans lequel
le couteau de mélange (23) comprend une tête de mélange à lame interne (232); la tête de mélange à lame interne (232) comprend un deuxième raccordement tubulaire (2321) et une deuxième tête de mélange de forme plate circulaire (2322) dont la partie centrale est reliée au deuxième raccordement (2321) ; au moins un trou traversant (2323) est formé dans la plaque plate de la deuxième tête de mélange (2322), le bord de chaque trou traversant agencé respectivement avec une lame de coupe sphérique (2324); les lames de coupe sphériques (2324) couvrent les trous traversants correspondants (2323) partiellement ; et le deuxième raccordement (2321) est adapté à être relié de façon détachable à la tige de transmission de la partie de transmission du mouvement de mélange (22).

7. Produit mélangeur selon la revendication 6, dans lequel
le couteau de mélange (23) comprend une tête de mélange à lame double (233) ; la tête de mélange à lame double (233) comprend un troisième raccordement tubulaire (2331) et une troisième tête de mélange en forme de barrette droite (2332) dont la partie centrale est reliée au troisième raccordement (2331); les deux extrémités de la troisième tête de mélange (2332) sont formées respectivement avec une partie lame de coupe (2333) et le troisième raccordement (2331) est adapté à être relié de façon détachable à la tige de transmission de la partie de transmission du mouvement de mélange (22).

8. Produit mélangeur selon la revendication 1, dans lequel
le couteau de mélange (23) comprend une tête de mélange à quatre lames (234) ; ladite tête de mélange à quatre lames (234) comprend un quatrième raccordement tubulaire (2341) et une quatrième tête de mélange en forme de barrette droite (2342) dont la partie centrale est reliée au quatrième raccordement (2341); une extrémité de la quatrième tête de mélange (2342) est une lame supérieure (2343) courbée vers le haut, tandis que l'autre extrémité est une lame inférieure (2344) courbée deux fois vers le bas dont la face d'outil est parallèle à la partie centrale de la quatrième tête de mélange (2342) ; la partie centrale de la quatrième tête de mélange (2342) est agencée avec deux lames horizontales de forme plate triangulaire (2345) faisant saillie vers l'extérieur et le quatrième raccordement (2341) est adapté à être relié de façon détachable à la tige de transmission de la partie de transmission du mouvement de mélange (22).

9. Produit mélangeur selon la revendication 1, dans lequel
celui-ci comprend en outre un démonte-lame (24) destiné au montage et au démontage du couteau de mélange (23) à partir de la partie de transmission du mouvement de mélange (22) ; le démonte-lame (24) est en forme de barrette dont une extrémité est pourvue d'une embouchure de serrage (241) en retrait vers la plaque intérieurement ; avec la fonction de verrouillage et de bouclage de l'embouchure de serrage (241), le couteau de mélange (23) est installé sur la tête de la tige de transmission de la partie de transmission du mouvement de mélange (22), ou le couteau de mélange (23) est retiré à partir de la tête de la tige de transmission de la partie de transmission du mouvement de mélange (22).

10. Produit mélangeur selon la revendication 1, dans lequel
la partie de transmission du mouvement de mélange (22) comprend un couvercle de la tête de mélange (221) agencé à l'extrémité de la tête de la tige de transmission, destinée à couvrir le couteau de mélange (23) qui est installé sur la tête de la tige de transmission ; le couvercle de la tête de mélange (221) comprend un couvercle supérieur en forme de surface conique (2211) et un couvercle de jupe tubulaire (2212) agencé afin d'être relié à un bord inférieur de l'extrémité du couvercle supérieur (2211) de plus grand diamètre.

11. Procédé d'utilisation du produit mélangeur selon la revendication 1, **caractérisé en ce que** le procédé comprend les étapes suivantes :
A. lorsque le mélangeur portatif doit être utilisé, soulever et tirer vers le bas le couvercle principal de réception comportant la fonction de verre doseur (13) à partir de la base de réception d'accessoire (11) couvrant le couvercle de séparation de réception et de support (12) et retourner le couvercle principal de réception comportant la fonction de verre doseur (13) pour être dans l'état où le fond du godet est situé sous l'ouverture du godet, ainsi, le couvercle principal de réception comportant la fonction de verre doseur (13) sert de verre doseur ;
B. infuser la substance nécessaire devant être mélangée dans le couvercle principal de réception retourné vers le haut comportant la fonction de verre doseur (13) qui sert de verre doseur ;
C. assembler la partie portative (21) avec la partie de transmission du mouvement de mélange (22) ;
D. ouvrir le couvercle de séparation de réception et de support (12), choisir un couteau de mélange (23) et installer le couteau de mélange (23) sur la tête de la tige de transmission de la partie de transmission du mouvement de mélange (22) par le biais du démonte-lame (24) ;
E. étendre le mélangeur portatif assemblé dans le couvercle principal de réception comportant une fonction de verre doseur (13) destinée au mélange ;
F. lorsque le mélangeur portatif doit être réceptionné après le mélange, déposer le couteau de mélange (23) de la tête de la tige de transmission de la partie de transmission du mouvement de mélange (22) par le biais du démonte-lame (24) ;
G. placer le couteau de mélange (23) et le démonte-lame (24) dans la base de réception d'accessoire (11) ; et couvrir la base de réception d'accessoire (11) avec le couvercle de séparation de réception et de support (12) ;
H. démonter la partie portative (21) et la partie de transmission du mouvement de mélange (22) et les placer en haut du couvercle de séparation de réception et de support (12) ;
I. après le nettoyage du couvercle principal de réception comportant une fonction de verre doseur (13), le renverser pour être dans l'état où le fond du godet est situé sous l'ouverture du godet, de manière à couvrir la partie portative (21) et la partie de transmission du mouvement de mélange (22), ainsi que ledit couvercle de séparation de réception et de support (12) et la base de réception d'accessoire (11).
